# FASCICULE DE BREVET EUROPEEN

(11) **EP 4 204 886 B1**
(45) Date de publication et mention de la délivrance du brevet: **09.10.2024**
(21) Numéro de dépôt: 21769118.7
(22) Date de dépôt: 26.08.2021
(51) Int. Cl.: G01J 3/02, G01J 3/44, G02B 17/06, G02B 21/04, G02B 5/00, G02B 21/08

(54) **SYSTEME OPTIQUE DE FOCALISATION ET DE COLLECTION**
OPTISCHES FOKUSSIERUNGS- UND SAMMELSYSTEM
OPTICAL FOCUSING AND COLLECTING SYSTEM

(30) Priorité: 28.08.2020 FR 2008794
(43) Date de publication de la demande: 05.07.2023
(73) Titulaire: Commissariat à l'énergie atomique et aux énergies alternatives, 75015 Paris (FR); Centre National de la Recherche Scientifique, 75016 Paris 16 (FR)
(72) Inventeur: CLOT, Eric, 38054 GRENOBLE (FR); JOUMARD, Isabelle, 38054 GRENOBLE (FR); NALETOV, Vladimir, KAZAN, 420008 (RU); KLEIN, Olivier, 38054 GRENOBLE (FR)
(74) Mandataire: Brevalex
(86) Numéro de dépôt international: PCT/EP2021/073653
(87) Numéro de publication internationale: WO 2022/043460

(56) Documents cités:
- WO-A1-2012/165549
- WO-A2-2010/141092
- FR-A1- 2 433 767
- JP-A- 2010 139 465

## Description

### DOMAINE TECHNIQUE

Le domaine de l'invention est celui des systèmes optiques de focalisation et collection, pouvant notamment être utilisés dans le cadre de la microscopie confocale et de la spectroscopie, par exemple de type fluorescence ou Raman.

### ÉTAT DE LA TECHNIQUE ANTÉRIEURE

Dans les domaines de la microscopie confocale et de la spectroscopie, le système optique peut comporter : un émetteur optique adapté à émettre un faisceau lumineux dit primaire ou d'excitation ; un système optique adapté d'une part à focaliser le faisceau lumineux primaire sur un échantillon à analyser, et d'autre part à collecter un faisceau lumineux dit secondaire provenant de l'échantillon en réponse à son excitation par le faisceau lumineux primaire ; et un système de photodétection destiné à recevoir et détecter le faisceau lumineux secondaire. Le système optique est alors situé entre l'émetteur optique et le photodétecteur d'une part, et l'échantillon à analyser d'autre part. Idéalement, l'ensemble du système optique devrait pouvoir fonctionner à la limite de diffraction, où la taille des spots lumineux primaire et secondaire est réduite conjointement à leur longueur d'onde au niveau de l'échantillon. Cependant, les deux faisceaux lumineux primaires et secondaires pouvant être à des fréquences différentes, le système optique est optimisé pour ces deux fréquences. Cela peut alors se faire en séparant les chemins optiques par l'emploi d'un filtre dichroïque.

Certains objectifs de microscope confocal ou de spectromètre assurent ces fonctions optiques de focalisation et de collection. Ils peuvent appartenir à la classe des systèmes optiques dioptriques, c'est-à-dire des systèmes optiques formés uniquement d'éléments optiques dioptriques (i.e réfractifs) ; ou appartenir à la classe des systèmes optiques catadioptriques, c'est-à-dire des systèmes optiques formés d'une combinaison d'éléments optiques dioptriques et d'éléments optiques réflectifs.

Dans le but d'approcher de l'achromaticité, ils peuvent comporter une pluralité de lentilles choisies et agencées de manière à corriger, autant que possible, les aberrations chromatiques et sphériques. Cependant, cette pluralité de lentilles conduit à un encombrement important pour une ouverture numérique donnée, alors même que l'on cherche généralement à disposer d'un système optique compact avec une distance de travail adaptée (distance entre la sortie du système optique et le plan focal) permettant de maximiser la collection et la détection de faisceaux lumineux d'intérêts. De plus, chacune de ces lentilles absorbe ou réfléchie légèrement la lumière qui les traverse et en réduit d'autant l'efficacité de transmission.

Par ailleurs, il existe également des systèmes optiques de type catoptrique, c'est-à-dire formés uniquement d'éléments optiques réflectifs, qui sont intrinsèquement achromiques. Cependant, selon la solution choisie, ils peuvent présenter une zone d'obscurité plus ou moins importante située suivant l'axe optique du système optique, dégradant ainsi les performances du système optique, tel que par exemple le taux de collection du faisceau lumineux secondaire (rapport entre le nombre de photons du faisceau lumineux secondaire collectés sur le nombre de photons du faisceau lumineux secondaire émis). Cette dégradation des performances et de l'isotropie de détection peut rendre le système inadéquat pour certaines utilisations du fait de cette perte d'information au centre du champ de vision.

Le document WO2010/141092A2 décrit un système optique catoptrique et axiconique, adapté à focaliser un faisceau lumineux. Ce système optique est formé de plusieurs surfaces réflectrices coniques coaxiales. Cependant, ce système optique, conçu pour de la microscopie optique non-confocale, s'il peut être utilisé pour focaliser un faisceau lumineux primaire et collecter un faisceau lumineux secondaire, ne permet pas de différentier les chemins optiques de ces faisceaux lumineux. Il est alors nécessaire d'utiliser un filtre dichroïque semi-réfléchissant et éventuellement un filtre spectral pour ne transmettre au système de photodétection que les photons du faisceau lumineux secondaire. Néanmoins, l'utilisation de ces filtres se traduit par une dégradation des performances de détection du système optique. Les documents WO 2012/165549, FR 2 433 767 et JP 2010 139465 divulguent d'autres systèmes optiques conventionnels.

### EXPOSÉ DE L'INVENTION

L'invention a pour objectif de remédier au moins en partie aux inconvénients de l'art antérieur, et plus particulièrement de proposer un système optique de focalisation et de collection basé sur une optique catoptrique et axiconique, aux performances améliorées, présentant notamment un faible encombrement relatif, une importante ouverture numérique associée, ainsi qu'une distance de travail qui peut être adaptée selon les applications visées, sans qu'il soit nécessaire d'utiliser un filtre dichroïque semi-réfléchissant pour séparer les chemins optiques des faisceaux lumineux primaire et secondaire.

Pour cela, l'objet de l'invention est un système optique de focalisation et de collection, tel que défini dans la revendication 1 et destiné à focaliser sur un échantillon à analyser un faisceau lumineux dit primaire émis par un émetteur optique, et à collecter un faisceau lumineux dit secondaire émis par l'échantillon en réponse au faisceau lumineux primaire et à le transmettre vers un système de photodétection, ce système optique comportant plusieurs parties optiques centrées chacune suivant un même axe optique principal.

Il comporte ainsi une première partie optique de mise en forme, adaptée à recevoir le faisceau lumineux primaire sur une surface d'entrée, et à fournir le faisceau lumineux primaire rendu annulaire autour de l'axe optique principal par une surface de sortie.

Il comporte également une deuxième partie optique de focalisation et de collection, comportant :
- une surface réflectrice dite centrale supérieure, conique, formée d'une zone centrale entourée par une zone périphérique, et adaptée à réfléchir par la zone périphérique le faisceau lumineux primaire annulaire provenant de la surface de sortie de la première partie optique, et à réfléchir par la zone centrale le faisceau lumineux secondaire incident provenant d'une surface réflectrice dite centrale inférieure ;
- la surface réflectrice centrale inférieure, conique, adaptée à réfléchir et focaliser sur l'échantillon le faisceau lumineux primaire incident provenant de la surface réflectrice centrale supérieure ; et à collecter et réfléchir le faisceau lumineux secondaire émis par l'échantillon ;
- au moins deux surfaces réflectrices tronconiques et périphériques, couplant optiquement les surfaces réflectrices centrales supérieure et inférieure.

Il comporte enfin une troisième partie optique de renvoi, comportant une surface réflectrice :
- située entre la surface de sortie de la première partie optique et la surface réflectrice centrale supérieure de la deuxième partie optique, suivant l'axe optique principal et présentant des dimensions transversales inférieures à celles du faisceau lumineux primaire annulaire fourni par la surface de sortie, et
- adaptée à réfléchir en direction du système de photodétection le faisceau lumineux secondaire provenant de la zone centrale de la surface réflectrice centrale supérieure.

Certains aspects préférés mais non limitatifs de ce système optique sont les suivants.

Les première, deuxième et troisième parties optiques peuvent être superposées axialement les unes aux autres, c'est-à-dire suivant l'axe optique principal.

La première partie optique peut être catoptrique, les surfaces d'entrée et de sortie étant réflectrices.

La deuxième partie optique peut être conique et catoptrique, les surfaces réflectrices centrales supérieure et inférieure étant superposées l'une à l'autre et coaxiales suivant l'axe optique principal.

La deuxième partie optique peut comporter :
- une surface réflectrice périphérique supérieure, en forme de cône tronqué creux entourant radialement la surface réflectrice centrale supérieure, adaptée à réfléchir le faisceau lumineux primaire provenant de la surface réflectrice centrale supérieure, et à réfléchir le faisceau lumineux secondaire provenant d'une surface réflectrice dite périphérique inférieure ;
- la surface réflectrice périphérique inférieure, en forme de cône tronqué creux entourant radialement la surface réflectrice centrale inférieure, adaptée à réfléchir le faisceau lumineux primaire provenant de la surface réflectrice périphérique supérieure, et à réfléchir le faisceau lumineux secondaire provenant de la surface réflectrice centrale inférieure.

Le faisceau lumineux primaire peut être focalisé par la surface réflectrice centrale inférieure suivant un angle d'inclinaison central par rapport à l'axe optique principal au moins égal à 25°.

La deuxième partie optique peut présenter une ouverture numérique supérieure ou égale à 0.5.

La deuxième partie optique peut présenter une distance dite de travail suivant l'axe optique principal, définie comme étant la distance entre le sommet du cône formé par la surface réflectrice centrale inférieure et le point focal, qui dépend d'une part du diamètre interne maximal de la deuxième partie optique de focalisation/collection et d'autre part du profil des surfaces réflectrices périphériques supérieure et inférieure et des surfaces réflectrices centrales supérieure et inférieure. Le diamètre interne maximal de la deuxième partie optique est défini ici comme la distance maximale, suivant un axe orthogonal à l'axe optique principal, reliant deux points opposés d'une extrémité radiale des surfaces réflectrices tronconiques et périphériques.

L'invention porte également sur un système d'analyse tel que défini dans la revendication 9, comportant un système optique selon l'une quelconque des caractéristiques précédentes, un émetteur optique adapté à émettre le faisceau lumineux primaire, et un système de photodétection adapté à détecter le faisceau lumineux secondaire.

L'émetteur optique peut émettre un faisceau lumineux primaire collimaté et est incident sur la surface d'entrée suivant l'axe optique principal.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1 est une vue schématique en coupe d'un système optique, couplé à un émetteur optique et à un système de photodétection, selon un mode de réalisation ;
la figure 2A illustre un exemple de cône de focalisation du faisceau lumineux primaire émis par l'émetteur optique et transmis par le système optique illustré sur la fig.1 ;
la figure 2B illustre un exemple de cône de collection du faisceau lumineux secondaire émis par un échantillon à analyser en réponse au faisceau lumineux primaire, et collecté par le système optique illustré sur la fig.1 ;
la figure 2C illustre un exemple de cône de collection du faisceau lumineux de mesure, c'est-à-dire de la portion du faisceau lumineux secondaire collecté par le système optique illustré sur la fig.1, et détecté par le système de photodétection ;
les figures 3A et 3B sont des vues schématiques et partielles, en coupe (fig.3A) et en perspective (fig.3B), d'un système optique selon un mode de réalisation similaire à celui illustré sur la fig.1 ;
la figure 4 est une vue schématique et partielle, en coupe, d'une partie optique de focalisation/collection d'un système optique selon une variante de réalisation ;
la figure 5 est une vue schématique et partielle, en coupe, d'un système optique selon une variante de réalisation dans laquelle la réflexion par les surfaces réflectrices de la partie optique de focalisation/collection est une réflexion de type vitreuse (par réflexion totale interne).

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

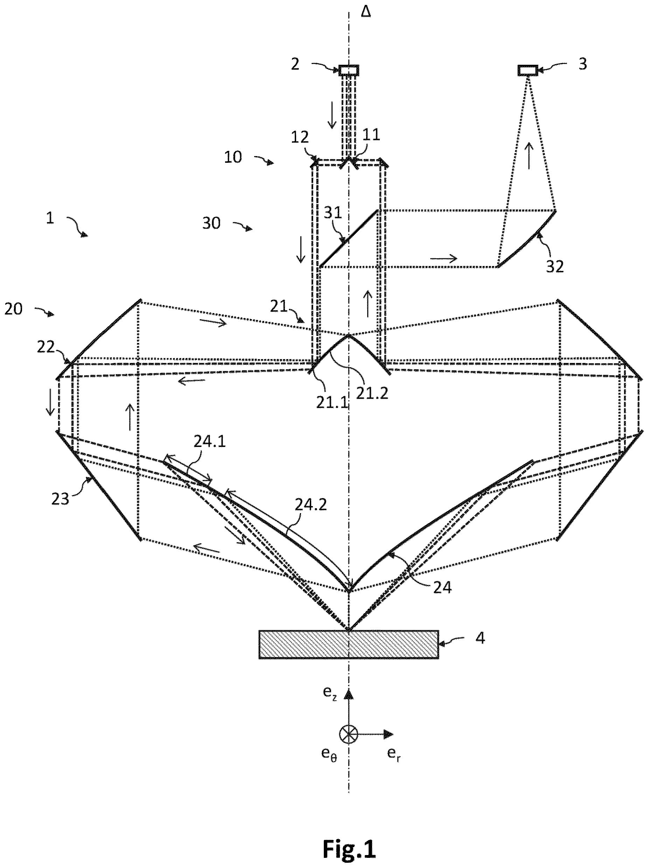

La figure 1 est une vue schématique et partielle, en coupe transversale suivant l'axe optique principal Δ du système optique 1 de focalisation et de collection selon un mode de réalisation.

On définit ici et pour la suite de la description un repère direct tridimensionnel orthogonal (eᵣ,e_{θ},e_{z}) en coordonnées cylindriques, où le vecteur e, est centré sur l'axe optique principal Δ du système optique 1 et dirigé d'un l'échantillon 4 à analyser vers le système optique 1, où le vecteur eᵣ est orthogonal à l'axe e_{z}, et où le vecteur e_{θ} est orthogonal au plan (eᵣ,e_{z}). Dans la suite de la description, les termes « inférieur » et « supérieur » s'entendent comme étant relatifs à un positionnement croissant lorsqu'on s'éloigne de l'échantillon 4 suivant le vecteur +e_{z}.

Le système optique 1 est adapté à focaliser sur un échantillon à analyser 4 un faisceau lumineux dit primaire émis par un émetteur optique 2, et à collecter un faisceau lumineux dit secondaire émis par l'échantillon 4 en réponse à son excitation par le faisceau lumineux primaire, et à le transmettre en direction d'un système de photodétection 3. La part du faisceau lumineux de réponse reçue par le système de photodétection 3 est appelée faisceau lumineux de mesure. Le système optique 1 est donc disposé entre l'émetteur optique 2 et le système de photodétection 3 d'une part, et l'échantillon 4 d'autre part. Il peut trouver une application notamment dans les domaines de la microscopie confocale et de la spectroscopie, par exemple de type Raman ou à fluorescence.

D'une manière générale, le système optique 1 comporte plusieurs parties optiques, superposées les unes sur les autres et centrées suivant l'axe optique principal Δ du système optique 1, parmi lesquelles :
∘ une première partie optique 10 dite de mise en forme, adaptée à rendre annulaire autour de l'axe optique principal Δ le faisceau lumineux primaire émis par l'émetteur optique 2 ;
∘ une deuxième partie optique 20 dite de focalisation et de collection, adaptée à focaliser sur l'échantillon 4 le faisceau lumineux primaire annulaire reçu de la première partie optique 10, et à collecter le faisceau lumineux émis par l'échantillon 4 en réponse à son excitation par le faisceau lumineux primaire annulaire ;
∘ une troisième partie optique 30 dite de renvoi, adaptée à renvoyer en direction du système de photodétection 3 le faisceau lumineux secondaire reçu de la deuxième partie optique 20. Cette troisième partie optique 30 comporte une surface réflectrice 31 située entre la première et la deuxième parties optiques 10, 20 suivant l'axe optique principal Δ, et à l'intérieur d'un espace délimité radialement par le faisceau lumineux primaire annulaire fourni par la première partie optique 10.

L'émetteur optique 2 est adapté à émettre le faisceau lumineux primaire en direction de la partie optique 10 de renvoi du système optique 1. L'émetteur optique 2 comporte une source optique émettant le faisceau lumineux primaire. Cette source optique peut être une diode laser ou une diode électroluminescente, entre autres.

La faisceau lumineux primaire peut être monochromatique ou polychromatique. La longueur d'onde centrale et la gamme spectrale du faisceau lumineux primaire dépendent de l'application envisagée du système optique 1. A titre illustratif, elles peuvent être situées dans le domaine du visible, ultra-violet, voire de l'infrarouge. De préférence, le faisceau lumineux primaire est monochromatique, de manière à limiter les aberrations chromatiques associées à certains éléments éventuellement dioptriques du système optique.

De préférence, le faisceau lumineux primaire est plein et collimaté. Autrement dit, il présente une distribution angulaire en intensité qui est continue (par exemple de type gaussien) et se distingue ainsi des faisceaux lumineux annulaires (donc creux). De plus, étant de préférence collimaté, les rayons lumineux qui le composent sont parallèles entre eux. L'émetteur optique 2 peut comporter un collimateur (non représenté) situé en sortie de la source optique lorsque la source optique émet un faisceau lumineux divergent, comme par exemple dans le cas d'une diode électroluminescente.

Le système de photodétection 3 est adapté à recevoir et détecter le faisceau lumineux de mesure, c'est-à-dire une portion du faisceau lumineux secondaire collectée par le système optique. Il peut fournir un signal électrique à une unité de traitement, dont l'intensité est représentative de la puissance optique du faisceau lumineux secondaire détecté. Il peut s'agir d'une photodiode à avalanche, d'un capteur CCD, ou de tout autre photodétecteur équivalent.

Comme mentionné précédemment, le système optique 1 comporte au moins trois parties optiques 10, 20, 30, centrées chacune suivant l'axe optique principal Δ, et superposées l'une à l'autre. L'axe optique principal Δ passe par le point focal situé au niveau de l'échantillon 4 à analyser.

La première partie optique 10 est adaptée à mettre en forme le faisceau lumineux primaire émis par l'émetteur optique 2 de manière annulaire autour de l'axe optique principal Δ, et à le transmettre à la deuxième partie optique 20. La première partie optique 10 est donc dite de mise en forme.

La partie optique 10 de mise en forme est ici avantageusement catoptrique (i.e. formée uniquement d'éléments optiques réflectifs), en particulier lorsque le faisceau lumineux primaire est polychromatique de manière à limiter la présence d'aberrations chromatiques, mais également dans le cas où le faisceau lumineux primaire est monochromatique. Ainsi, on optimise la compacité du système optique. De plus, on évite une émission éventuelle de faisceaux lumineux parasites, par exemple par fluorescence, par un matériau de dioptres alors excité par le faisceau lumineux primaire monochromatique. Cependant, en variante, elle peut être dioptrique (formée uniquement d'éléments optiques réfractifs) ou catadioptrique (formée d'éléments optiques réfractifs et d'éléments optiques réflectifs), en particulier lorsque le faisceau lumineux primaire est monochromatique.

Dans cet exemple, la partie optique 10 de mise en forme comporte une surface réflectrice 11, conique et centrale, entourée radialement par une surface réflectrice 12, tronconique et périphérique. La surface réflectrice 11 est la surface d'entrée de la partie optique 10 de mise en forme, et la surface réflectrice 12 en est la surface de sortie. Ces différentes surfaces réflectrices sont coaxiales et centrées sur l'axe optique principal Δ.

La surface réflectrice 11 est dite conique et centrale, dans la mesure où le sommet du cône est situé sur l'axe optique principal Δ. De plus, elle correspond à une surface externe du cône (tournée vers l'extérieur du cône). Elle est ici de profil linéaire, mais elle peut être convexe ou concave. La forme de la base du cône est ici circulaire (cône à symétrie de révolution), mais elle peut être ovale, voire polygonale.

La surface réflectrice 12 est dite tronconique et périphérique. Autrement dit, elle correspond à une surface interne d'un cône tronqué (tournée vers l'intérieur du cône), de sorte que le faisceau lumineux primaire puisse atteindre la surface réflectrice 11. Elle entoure radialement la surface réflectrice 11, et les surfaces réflectrices 11 et 12 sont coaxiales et centrées sur l'axe optique principal Δ. La surface réflectrice 12 est de préférence de profil linéaire ou concave, de manière à limiter l'ouverture angulaire du faisceau lumineux primaire réfléchi. La forme de la base du cône est ici identique à celle de la surface réflectrice 11.

La surface réflectrice 11 est orientée vers l'émetteur optique 2 et vers la surface réflectrice 12. Celle-ci est orientée vers la surface réflectrice 11 et vers une surface réflectrice 21 de la deuxième partie optique 20.

Ainsi, la surface réflectrice 11 reçoit le faisceau lumineux primaire alors plein et collimaté, et le réfléchit vers la surface réflectrice 12. Le faisceau lumineux primaire devient alors annulaire, et est donc régulièrement réparti autour de l'axe optique principal Δ. Il est réfléchi par la surface réflectrice 12 vers la surface réflectrice 21 de la deuxième partie optique 20.

La deuxième partie optique 20 est adaptée à focaliser sur l'échantillon 4 le faisceau lumineux primaire alors annulaire, et à collecter un faisceau lumineux secondaire émis par l'échantillon 4 alors excité et à le transmettre vers un système de photodétection 3. La deuxième partie optique 20 est donc dite de focalisation/collection.

La partie optique 20 de focalisation/collection est catoptrique. Elle ne comporte donc que des éléments optiques réflectifs. Le fait qu'elle soit combinée avec les première et troisième parties optiques 10, 30, permet d'adapter la distance de travail et d'augmenter si besoin l'ouverture numérique, en fonction des applications visées, tout en ségréguant les chemins optiques du faisceau lumineux primaire et du faisceau lumineux de mesure.

Elle comporte une surface réflectrice supérieure 21, conique et centrale, superposée et située au-dessus suivant l'axe optique principal Δ d'une surface réflectrice inférieure 24, conique et centrale. Ces surfaces réflectrices 21, 24 sont couplées optiquement l'une à l'autre par au moins les deux surfaces réflectrices 22 ; 23 tronconiques et périphériques. Dans cet exemple, la partie optique 20 de focalisation/collection comporte deux surfaces réflectrices tronconiques et périphériques, à savoir une surface réflectrice supérieure 22 et une surface réflectrice inférieure 23. Elles sont distinctes l'une de l'autre et agencées l'une par rapport à l'autre de sorte que le faisceau lumineux primaire et le faisceau lumineux secondaire sont réfléchis chacun au moins une fois sur la surface réflectrice supérieure 22 et au moins une fois sur la surface réflectrice inférieure 23. Ces différentes surfaces réflectrices sont coaxiales et centrées sur l'axe optique principal Δ.

La surface réflectrice centrale 21 est adaptée à réfléchir vers la surface réflectrice périphérique 22 le faisceau lumineux primaire alors annulaire provenant de la surface réflectrice 12. Elle correspond à une surface externe du cône de profil préférentiellement convexe. La forme de la base de ce cône non tronqué est de préférence identique à celle de la surface réflectrice 12. Elle est superposée et située sous la surface réflectrice 11 et la surface réflectrice 12. Le faisceau lumineux primaire est alors réfléchi par une zone périphérique 21.1 située à proximité de la base du cône. Cette zone périphérique 21.1 est distincte d'une zone centrale 21.2 de la surface réflectrice 21 adaptée à réfléchir le faisceau lumineux secondaire vers une surface réflectrice 31 de la troisième partie optique 30 de renvoi. La surface réflectrice centrale 21 est donc également adaptée à réfléchir vers la surface réflectrice 31 le faisceau lumineux secondaire provenant de la surface réflectrice périphérique 22. Le faisceau lumineux de mesure est alors réfléchi par la zone centrale 21.2 située à proximité du sommet. La zone centrale 21.2 présente une étendue surfacique supérieure ou égale à 50%, et de préférence à 57%, de l'étendue surfacique totale de la surface réflectrice centrale 21. L'étendue surfacique est ici définie comme étant une surface projetée sur un plan (eᵣ,e_{θ}).

La surface réflectrice périphérique 22 est adaptée à réfléchir le faisceau lumineux primaire vers la surface réflectrice périphérique 23 et à réfléchir le faisceau lumineux secondaire vers la surface réflectrice centrale 21. Elle entoure radialement la surface réflectrice centrale 21. Elle présente un profil ici de préférence concave, une forme de cône tronqué et en est une surface intérieure (tournée vers l'intérieur de ce cône tronqué).

La surface réflectrice périphérique 23 est adaptée à réfléchir le faisceau lumineux primaire vers la surface réflectrice centrale 24 et à réfléchir le faisceau lumineux secondaire vers la surface réflectrice périphérique 22. Elle entoure radialement la surface réflectrice centrale 24, et est superposée et située sous la surface réflectrice périphérique 22. Elle présente préférentiellement une forme de cône tronqué, de profil linéaire. C'est une surface intérieure (tournée vers l'intérieur de ce cône tronqué).

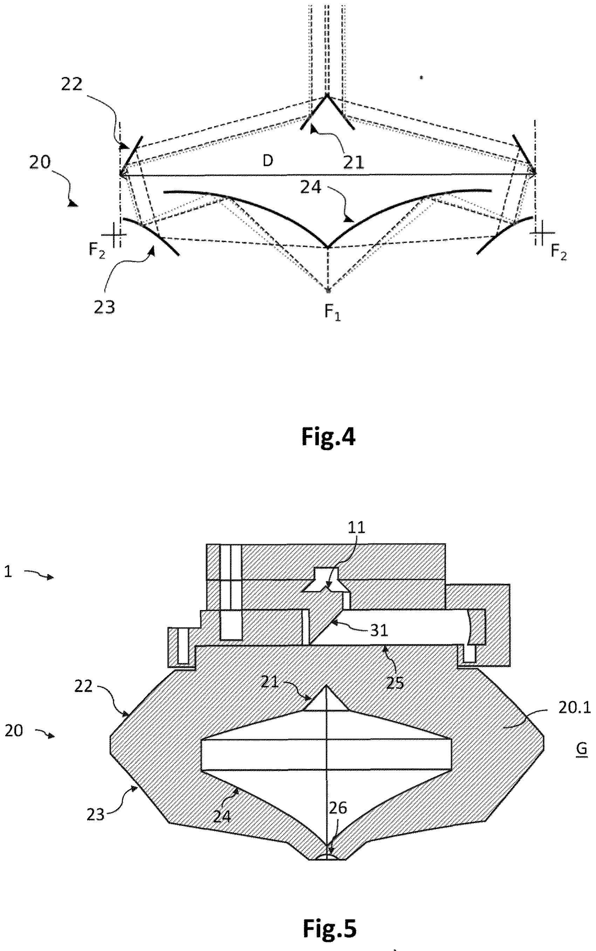

La figure 4 illustre, de manière schématique, une partie optique 20 de focalisation/collection selon une variante à la partie optique 20 illustrée sur la fig.1 (ici dans le cadre de réflexion de type métallique), dans laquelle la surface 21 et la surface 22 présentent un profil linéaire, la surface 23 a une forme de parabole convexe (de foyer F2), et la surface 24 présente un profil elliptique concave (de foyers F1 et F2). Notons que cet exemple est compatible avec une réflexion de type métallique comme avec une réflexion de type vitreuse (détaillée plus loin). Quoi qu'il en soit, les surfaces réflectrices 22 et 23 présentent chacune un profil adapté à assurer le couplage optique entre les surfaces réflectrices 21 et 24. Les profils de ces différentes surfaces réflectrices 21 à 24 peuvent être concaves, convexes, linéaires, paraboliques, elliptiques, etc.

La surface réflectrice centrale 24 est adaptée à réfléchir et focaliser sur l'échantillon 4 le faisceau lumineux primaire annulaire provenant de la surface réflectrice périphérique 23. La surface est donc de profil concave. Ce cône non tronqué présente un sommet orienté vers l'échantillon 4, et la surface réflectrice 24 en est la surface externe (tournée vers l'extérieur du cône). Le faisceau lumineux primaire est réfléchi par une zone périphérique 24.1 située à proximité de sa base. La surface réflectrice centrale 24 est donc également adaptée à réfléchir vers la surface réflectrice périphérique 23 le faisceau lumineux secondaire émis par l'échantillon 4 alors excité. La portion du faisceau lumineux secondaire ainsi collectée qui sera reçue par le système de photodétection 3 (faisceau lumineux de mesure) est réfléchie par la zone centrale 24.2 située à proximité du sommet.

La troisième partie optique 30 est adaptée à transmettre le faisceau lumineux de mesure vers le système de photodétection 3. Elle est alors appelée partie optique de renvoi.

Elle comporte une surface réflectrice 31 centrée sur l'axe optique principal Δ, et située entre la surface réflectrice 12 et la surface réflectrice centrale 21 suivant l'axe optique principal Δ. De plus, la surface réflectrice 31 est située dans l'espace délimité radialement par le faisceau lumineux primaire annulaire fourni par la surface réflectrice 12. La surface réflectrice 31 réfléchit ici le faisceau lumineux de mesure suivant une direction radiale eᵣ en direction ici d'une deuxième surface de renvoi 32, ici réflectrice, laquelle focalise le faisceau lumineux de mesure sur le système de photodétection 3. En variante, cette surface réflectrice 32 peut être absente, ou plusieurs surfaces réflectrices 32 peuvent être prévues sur le chemin optique du faisceau lumineux de mesure. De plus, au besoin, des filtres optiques et autres éléments optiques peuvent être disposés entre les surfaces 31 et 32.

En fonctionnement, l'émetteur optique 2 émet un faisceau lumineux primaire, lequel est ici monochromatique, plein et collimaté, en direction du système optique 1, suivant l'axe optique principal Δ. Le système optique 1 va le mettre en forme et le focaliser sur l'échantillon 4 à analyser.

Le faisceau lumineux primaire est tout d'abord reçu par la partie optique 10 de mise en forme, qui va le rendre annulaire. Pour cela, il est réfléchi par la surface réflectrice conique 11 radialement en direction de la surface réflectrice tronconique 12, puis est réfléchi par cette surface réflectrice 12 en direction de la partie optique 20 de focalisation/collection. Le faisceau lumineux primaire est alors rendu annulaire.

Le faisceau lumineux primaire alors annulaire se propage suivant l'axe optique principal Δ sans être perturbé par la présence de la surface réflectrice 31 de la partie optique 30 de renvoi. En effet, celle-ci présente des dimensions dans le plan (eᵣ,e_{θ}) inférieures aux dimensions intérieures du faisceau lumineux primaire.

Le faisceau lumineux primaire est ensuite reçu par la partie optique 20 de focalisation/collection, qui va le focaliser en un point focal situé au niveau de l'échantillon 4. Pour cela, il est réfléchi par la surface réflectrice conique 21 au niveau de sa zone périphérique 21.1 radialement en direction de la surface réflectrice tronconique 22, est réfléchi par cette surface réflectrice 22 en direction de la surface réflectrice tronconique 23, puis est réfléchi par cette surface réflectrice 23 en direction de la surface réflectrice conique 24 qui le focalise sur l'échantillon 4 à analyser.

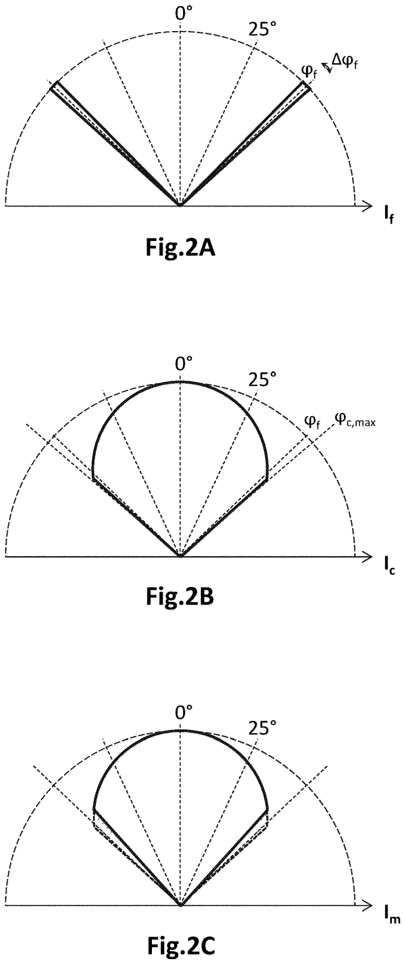

La figure 2A illustre un exemple de cône de focalisation du faisceau lumineux primaire sur l'échantillon 4 à analyser. Il s'agit ici de la distribution angulaire de l'intensité I_{f} du faisceau lumineux primaire autour de l'axe optique principal Δ.

Le faisceau lumineux primaire est incliné vis-à-vis de l'axe optique principal Δ d'un angle d'inclinaison φ_{f} et présente une ouverture angulaire Δφ_{f}, de sorte que le faisceau lumineux primaire est contenu dans un cône, délimité ici entre un angle minimal φ_{f}-Δφ_{f}/2 et un angle maximal φ_{f}+Δφ_{f}/2 et centré sur l'angle φ_{f}, et annulaire autour de l'axe optique principal Δ. Dans cet exemple, le faisceau lumineux primaire est annulaire sur une base circulaire, mais le même raisonnement s'applique pour un anneau à base polygonale.

Il apparaît que la combinaison de la partie optique 10 de mise en forme et de la partie optique 20 de focalisation/collection permet d'obtenir un angle d'inclinaison minimal φ_{f}-Δφ_{f}/2 important, par exemple au moins égal à 25°, voire au moins égal à 40°. Dans cet exemple, l'angle d'inclinaison minimal φ_{f}-Δφ_{f}/2 est égal à 45° environ, et l'ouverture angulaire Δφ_{f} est égal à 5° environ.

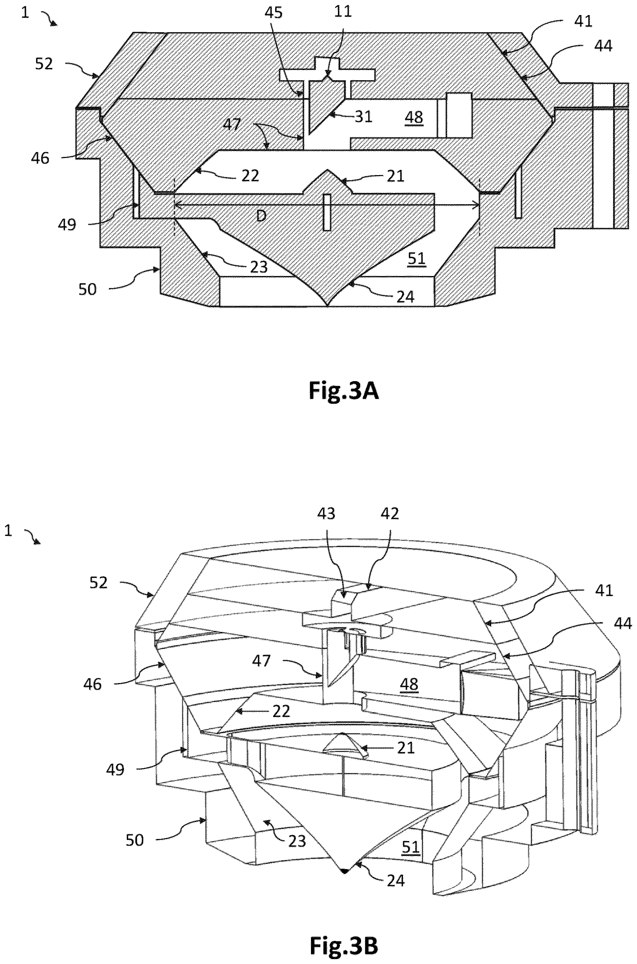

Cette focalisation particulièrement inclinée permet d'adapter la distance de travail en fonction des applications visées, cette distance de travail étant définie ici comme étant la distance entre le sommet de la surface réflectrice 24 et l'échantillon 4 à analyser suivant l'axe optique principal Δ. A titre d'exemple, elle peut ainsi être comprise entre 0.5mm environ et 5mm environ pour un diamètre interne maximal de 4cm environ de la partie optique 20. Comme mentionné précédemment, ce diamètre interne maximal D est défini ici comme la distance maximale, suivant un axe orthogonal à l'axe optique principal Δ, reliant deux points opposés d'une extrémité radiale des surfaces réflectrices 22 et 23 (cf. fig.3A). Ainsi, pour une valeur donnée du diamètre interne maximal D de la partie optique 20, on peut aussi bien avoir une faible distance de travail (et donc une très grande ouverture numérique) pour une utilisation nécessitant une grande compacité, comme avoir une plus grande distance de travail (et avec une ouverture numérique qui peut rester élevée) pour une utilisation nécessitant par exemple l'introduction de matériel de travail entre le système optique 1 et l'échantillon 4. La valeur de la distance de travail dépend de la valeur du diamètre interne maximal D ainsi que du profil des surfaces réflectrices 21, 22, 23 et 24.

On améliore ainsi les performances du système optique et l'homogénéité de l'illumination de l'échantillon en moyennant l'illumination selon le grand angle d'ouverture du système optique 1, par exemple de l'ordre de 0.7. De plus, l'encombrement du système optique 1 est particulièrement réduit. Et l'utilisation d'un filtre dichroïque n'est pas nécessaire.

Revenons à la fig.1. L'échantillon 4 à analyser, alors excité par le faisceau lumineux primaire, émet en retour un faisceau lumineux secondaire en direction du système optique 1. Il peut s'agir, à titre d'illustration, d'une émission de type fluorescence auquel cas la longueur d'onde centrale du faisceau lumineux secondaire peut être supérieure à celle du faisceau lumineux primaire, ou d'une émission de type Raman auquel cas la longueur d'onde centrale du faisceau lumineux secondaire est proche de celle du faisceau lumineux primaire.

Le faisceau lumineux secondaire est tout d'abord collecté par la partie optique 20 de focalisation/collection, qui le réfléchit vers la partie optique 30 de renvoi. Ainsi, il est réfléchi par la surface réflectrice conique 24 radialement vers la surface réflectrice tronconique 23 (il est alors rendu annulaire), puis est réfléchi par la surface réflectrice 23 vers la surface réflectrice tronconique 22, puis est réfléchi par la surface réflectrice 22 vers la surface réflectrice conique 21, qui la réfléchit enfin vers la partie optique 30 de renvoi.

Le faisceau lumineux secondaire peut ainsi être collecté par toute l'étendue surfacique de la surface réflectrice 24. Le système optique ne présente donc pas de zone d'obscurité intrinsèque dans le cône de collection, c'est-à-dire une zone d'intensité nulle (cône de collection creux) au niveau de l'axe optique principal dû au principe de fonctionnement du système optique, ce qui améliore les performances du système optique 1.

A ce titre, la figure 2B illustre un exemple de cône de collection du faisceau lumineux secondaire par la surface réflectrice 24. Il s'agit ici de la distribution angulaire de l'intensité I_{c} du faisceau lumineux secondaire autour de l'axe optique principal Δ.

Il apparaît ainsi que le cône de collection est plein, c'est-à-dire qu'il présente une intensité non nulle entre 0° et φ_{c,max}. Le système optique ne présente donc pas de zone d'obscurité dans le cône de collection. Dans cet exemple, l'angle φ_{c,max} est sensiblement égal aux valeurs φ_{f}-Δφ_{f}/2 et φ_{f}+Δφ_{f}/2, mais il pourrait être plus grand que ces valeurs. Ainsi, le taux de collection est particulièrement important. Le taux de collection peut être défini comme le rapport du nombre de photons émis par l'échantillon 4 et collectés sur le nombre de photons secondaires émis par l'échantillon 4. Il peut également s'agir du rapport de l'intensité cumulée du faisceau lumineux secondaire intégrée dans le cône de collection sur l'intensité cumulée du faisceau lumineux secondaire intégrée dans le demi-espace (eᵣ,e_{θ},+e_{z}).

Revenons à nouveau à la fig.1. Le faisceau lumineux secondaire alors annulaire est réfléchi par la surface réflectrice 21 en direction de la surface réflectrice 31 de la partie optique 30 de renvoi. Il est alors préférentiellement redevenu plein.

Le faisceau lumineux secondaire reçu par la surface réflectrice 31 est le faisceau lumineux de mesure, c'est-à-dire la portion du faisceau lumineux secondaire reçue par le système de photodétection 3. Il a été réfléchi par la zone centrale 21.2 de la surface réflectrice 21, et se propage dans l'espace radialement délimité par le faisceau lumineux primaire annulaire se propageant entre les surfaces réflectrices 12 et 21.

Ainsi, une faible portion du faisceau lumineux secondaire collecté est réfléchi en direction de la partie optique 10 de mise en forme (celle réfléchie par la zone périphérique 21.1). Cependant, cette zone périphérique 21.1 présente une étendue surfacique inférieure à celle de la zone centrale 21.2, de sorte que le taux de détection peut être particulièrement élevé, améliorant ainsi les performances du système optique.

Le faisceau lumineux de mesure est ensuite réfléchi par une surface réflectrice 32 et focalisé sur le plan focal du système de photodétection 3.

La figure 2C illustre un exemple de cône de collection par la surface réflectrice 24 associé au faisceau lumineux de mesure. Il s'agit ici de la distribution angulaire de l'intensité Iₘ du faisceau lumineux de mesure autour de l'axe optique principal Δ. Il s'agit en particulier de la portion du faisceau lumineux secondaire collecté par la zone centrale 24.2. Le cône de collection du faisceau lumineux secondaire correspond, au premier ordre, à la somme du cône de focalisation illustré sur la fig.2A et du cône de collection du faisceau lumineux de mesure illustré sur la fig.2C. Dans la mesure où l'ouverture angulaire Δφ_{f} est faible, le cône de collection du faisceau lumineux de mesure, et donc le taux de détection, est particulièrement important.

Ainsi, le système optique 1 permet de focaliser sur un échantillon à analyser un faisceau lumineux primaire émis par un émetteur optique 2, puis de collecter un faisceau lumineux secondaire émis par l'échantillon 4 alors excité et enfin de transmettre le faisceau lumineux secondaire jusqu'à un système de photodétection 3. Dans cet exemple, le système optique 1 est entièrement catoptrique, ce qui permet, notamment, de passer outre les aberrations chromatiques, les aberrations sphériques et de réaliser un système optique particulièrement compact.

Par ailleurs, par la superposition des trois parties optiques 10, 20, 30, lesquelles sont centrées sur l'axe optique principal Δ, et en particulier par le fait que la partie optique 10 rende annulaire le faisceau lumineux primaire pour ensuite le transmettre à la partie optique 20 de focalisation/collection, le système optique 1 présente une distance de travail qui peut être adaptée pour une valeur donnée du diamètre interne maximal D de la partie otique 20, et une grande ouverture numérique, de préférence supérieure ou égale à 0.5, par exemple de l'ordre de 0.7. De plus, par le fait que la surface réflectrice 31 de la partie optique 30 soit située entre les parties optiques 10 et 30 et disposée à l'intérieur de l'espace délimité radialement par le faisceau lumineux primaire alors annulaire, le système optique permet de ségréger les chemins optiques associés au faisceau lumineux primaire et au faisceau lumineux de mesure. Le système optique permet alors d'éviter l'utilisation d'un miroir ou filtre dichroïque, améliorant ainsi les performances du système optique 1. Le taux de collection ainsi que le taux de détection sont optimisés. De surcroît, le recours à de telles méthodes de ségrégations spatiales permet de limiter le phénomène de fluorescence parasite des surfaces réfléchissantes provoqué par le faisceau lumineux primaire pouvant être capté par le système de photodétection. Le rapport signal sur bruit s'en retrouve particulièrement augmenté.

Les figures 3A et 3B sont des vues schématiques et partielles, en coupe transversale (fig.3A) et en perspective (fig.3B), d'un système optique 1 similaire à celui illustré schématiquement sur la fig.1. Dans ce mode de réalisation, la réflexion des faisceaux lumineux émis et collectés est une réflexion de type métallique. Plus précisément, ces faisceaux se propagent ici au sein de la partie optique 20 de focalisation/collection dans un milieu fluide ou dans le vide, et sont réfléchis par les surfaces réflectrices 21 à 24 réalisées à base d'un métal (Ag, Al, Au, etc.).

Le système optique 1 comporte plusieurs blocs rigides assemblés les uns aux autres, autour d'un axe mécanique qui correspond à l'axe optique principal Δ.

Le système optique 1 comporte ici un couvercle 41 comportant un conduit radial 42 destiné à autoriser la propagation du faisceau lumineux primaire suivant une direction -eᵣ, le conduit radial 42 présentant une surface réflectrice 43, centrée sur l'axe optique principal Δ, adaptée à réfléchir le faisceau lumineux primaire incident en direction de la surface réflectrice 11.

Le système optique 1 comporte une première structure interne 44, située au contact et en dessous du couvercle 41, comportant un orifice traversant 45 dans lequel est situé un cône de révolution plein. Ce cône de révolution présente une face supérieure au niveau de laquelle est définie la surface réflectrice 11, et une face inférieure au niveau de laquelle est définie la surface réflectrice 31. La bordure de l'orifice traversant est structurée de manière à définir la surface réflectrice tronconique 12 (non représentée ici). L'espace libre entre le cône de révolution plein et la bordure de l'orifice traversant 45 autorise la propagation du faisceau lumineux primaire alors rendu annulaire.

Le système optique 1 comporte une deuxième structure interne 46, située au contact et en dessous de la première structure interne 44, comportant un orifice traversant 47 autorisant la propagation du faisceau lumineux primaire annulaire jusqu'à la surface réflectrice 21. Il comporte un conduit radial 48 autorisant la propagation du faisceau lumineux de mesure, alors réfléchi par la surface réflectrice 31, en direction du système de photodétection (via une surface réflectrice 32). L'orifice traversant 47 présente une dimension latérale plus grande au niveau de la partie inférieure de la deuxième structure interne 46. Une surface interne de l'orifice traversant 47 définit alors la surface réflectrice 22.

Le système optique 1 comporte une troisième structure interne 49, située au contact et en dessous de la deuxième structure interne 46. Elle comporte un bloc central dont une face supérieure définit la surface réflectrice conique 21, et une face inférieure définit la surface réflectrice conique 24.

Le système optique 1 comporte une quatrième structure 50, située au contact et en dessous de la troisième structure interne 49. Elle comporte un orifice traversant 51 dans lequel s'étend en partie le bloc central dont la surface réflectrice conique 24. Une bordure interne définit la surface réflectrice 23.

Enfin, une structure de maintien 52 est assemblée à la quatrième structure 50, et vient au contact des première, deuxième et troisième structures 44, 46, 49 pour en assurer le maintien. Ainsi, le système optique 1 présente une compacité particulièrement élevée, et peut présenter des dimensions inférieures ou égale à 5×5×5cm. Ce système optique optimisé selon l'invention peut présenter de faibles pertes optiques, notamment dues à la réalisation mécanique, par exemple inférieures à 7%.

Des modes de réalisation particuliers viennent d'être décrits. Différentes variantes et modifications apparaîtront à l'homme du métier.

Ainsi, des fibres optiques peuvent assurer le couplage optique entre l'émetteur optique 2 et la surface réflectrice 11, et entre la surface réflectrice 31 ou 32 et le système de photodétection 3.

Par ailleurs, un filtre spectral peut être disposé entre la surface réflectrice 31 ou 32 et le système de photodétection 3, pour ne transmettre que la bande spectrale destinée à être détectée.

Enfin, d'une manière générale, la réflexion des faisceaux lumineux émis et/ou collectés par les surfaces réflectrices du système optique 1 peut être une réflexion de type métallique (comme dans l'exemple des fig.3A et 3B) et/ou une réflexion de type vitreuse (i.e. par réflexion totale interne).

A ce titre, la figure 5 illustre un système optique 1 selon un autre mode de réalisation dans lequel la réflexion des faisceaux lumineux émis et collectés par les surfaces réflectrices 21 à 24 de la partie optique 20 de focalisation/collection est une réflexion de type vitreuse, c'est-à-dire par réflexion totale interne. Aussi, ils se propagent dans la partie optique 20 au sein d'un matériau solide 20.1 transparent à la longueur d'onde des faisceaux lumineux (par exemple un polymère optique, du diamant, etc.). Les courbures des miroirs sont telles que les angles de réflexion satisfont toujours la condition bien connue de réflexion totale interne qui fait intervenir ici les indices de réfraction du matériau transparent 20.1 et de l'environnement G. A ce titre, dans cet exemple, le matériau transparent 20.1 peut ici être un polymère optique d'indice de réfraction égal à 1.5 (par ex. de type Zeonex^{®}), qui est environné par de l'air G d'indice de réfraction égal à 1.

Dans cet exemple, les faisceaux lumineux émis se propagent dans la partie optique de mise en forme 10 dans un milieu fluide ou dans le vide et sont réfléchis par les surfaces réflectrices métalliques 11 et 12. Ils entrent ensuite dans la partie optique 20 en transversant une surface amont 25 (ici plane) de manière orthogonale, et se propagent dans le matériau transparent. Ils sont réfléchis par les surfaces réflectrices 21 à 24 par réflexion totale interne. Ils sortent de la partie optique 20 en traversant une surface aval 26 (ici courbe) de manière orthogonale. Cette surface aval est ici de forme sphérique dont le centre est confondu avec le point focal du système optique 1. Les faisceaux lumineux collectés suivent un parcours inverse similaire jusqu'à la surface réflectrice 31.

Le système optique 1 selon cette variante présente notamment l'avantage que les surfaces réflectrices 21 à 24 ont une réflectivité très élevée, supérieure à celle de surfaces métalliques, ce qui améliore les performances du système optique 1. De plus, la partie optique 20 est réalisée d'un seul tenant et en un même matériau, ce qui simplifie la fabrication et l'agencement relatif des différents éléments, notamment par rapport au cas où la partie optique 20 serait formée de plusieurs éléments distincts. De plus, les surfaces 21 et 24 n'ont plus besoin de système mécanique de maintien qui serait situé dans le passage des faisceaux optiques.

## Revendications

1. Système optique (1) de focalisation et de collection, destiné à focaliser sur un échantillon (4) à analyser un faisceau lumineux dit primaire émis par un émetteur optique (2), et à collecter un faisceau lumineux dit secondaire émis par l'échantillon (4) en réponse au faisceau lumineux primaire et à le transmettre vers un système de photodétection (3), ce système optique (1) comportant plusieurs parties optiques (10, 20, 30) centrées chacune suivant un même axe optique principal (Δ), dont :
∘ une première partie optique (10) de mise en forme, adaptée à recevoir le faisceau lumineux primaire sur une surface d'entrée (11), et à fournir le faisceau lumineux primaire rendu annulaire autour de l'axe optique principal (Δ) par une surface de sortie (12) ;
∘ une deuxième partie optique (20) de focalisation et de collection, comportant :
• une surface réflectrice dite centrale supérieure (21), conique, formée d'une zone centrale (21.2) entourée par une zone périphérique (21.1), et adaptée à réfléchir par la zone périphérique (21.1) le faisceau lumineux primaire annulaire provenant de la surface de sortie (12) de la première partie optique (10), et à réfléchir par la zone centrale (21.2) le faisceau lumineux secondaire incident provenant d'une surface réflectrice dite centrale inférieure (24) ;
• la surface réflectrice centrale inférieure (24), conique, adaptée à réfléchir et focaliser sur l'échantillon (4) le faisceau lumineux primaire incident provenant de la surface réflectrice centrale supérieure (21) ; et à collecter et réfléchir le faisceau lumineux secondaire émis par l'échantillon (4) ;
• au moins deux surfaces réflectrices (22 ; 23) tronconiques et périphériques, couplant optiquement les surfaces réflectrices centrales supérieure (21) et inférieure (24) ;
∘ une troisième partie optique (30) de renvoi, comportant une surface réflectrice (31) :
• située entre la surface de sortie (12) de la première partie optique (10) et la surface réflectrice centrale supérieure (21) de la deuxième partie optique (20), suivant l'axe optique principal (Δ) et présentant des dimensions transversales inférieures à celles du faisceau lumineux primaire annulaire fourni par la surface de sortie (12), et
• adaptée à réfléchir en direction du système de photodétection (3) le faisceau lumineux secondaire provenant de la zone centrale (21.2) de la surface réflectrice centrale supérieure (21).

2. Système optique (1) selon la revendication 1, dans lequel les premier, deuxième et troisième parties optiques (10, 20, 30) sont superposées axialement les unes aux autres suivant l'axe optique principal (Δ).

3. Système optique (1) selon la revendication 1 ou 2, dans lequel la première partie optique (10) est catoptrique, les surfaces d'entrée (11) et de sortie (12) étant réflectrices.

4. Système optique (1) selon l'une quelconque des revendications 1 à 3, dans lequel la deuxième partie optique (20) est conique et catoptrique, les surfaces réflectrices centrales supérieure (21) et inférieure (24) étant superposées l'une à l'autre et coaxiales suivant l'axe optique principal (Δ).

5. Système optique (1) selon l'une quelconque des revendications 1 à 4, dans lequel lesdites au moins deux surfaces réflectrices (22 ; 23) tronconiques et périphériques de la deuxième partie optique (20) comportent :
∘ une surface réflectrice périphérique supérieure (22), en forme de cône tronqué creux entourant radialement la surface réflectrice centrale supérieure (21), adaptée à réfléchir le faisceau lumineux primaire provenant de la surface réflectrice centrale supérieure (21), et à réfléchir le faisceau lumineux secondaire provenant d'une surface réflectrice dite périphérique inférieure (23) ;
∘ la surface réflectrice périphérique inférieure (23), en forme de cône tronqué creux entourant radialement la surface réflectrice centrale inférieure (24), adaptée à réfléchir le faisceau lumineux primaire provenant de la surface réflectrice périphérique supérieure (22), et à réfléchir le faisceau lumineux secondaire provenant de la surface réflectrice centrale inférieure (24).

6. Système optique (1) selon l'une quelconque des revendications 1 à 5, dans lequel le faisceau lumineux primaire est focalisé par la surface réflectrice centrale inférieure (24) suivant un angle d'inclinaison central par rapport à l'axe optique principal (Δ) au moins égal à 25°.

7. Système optique (1) selon l'une quelconque des revendications 1 à 6, dans lequel la deuxième partie optique (20) présente une ouverture numérique supérieure ou égale à 0.5.

8. Système optique (1) selon l'une quelconque des revendications 1 à 7, dans lequel la deuxième partie optique (20) présente une distance dite de travail suivant l'axe optique principal (Δ), entre le sommet du cône formé par la surface réflectrice centrale inférieure (24) et le point focal, dépendant d'une part d'un diamètre interne maximal (D) de la partie optique (20) et d'autre part d'un profil des surfaces réflectrices périphériques tronconiques et périphériques (22, 23) et des surfaces réflectrices centrales supérieure (21) et inférieure (24), la distance interne maximale (D) étant définie comme une distance maximale, suivant un axe orthogonal à l'axe optique principal (Δ), entre deux points opposés d'une extrémité radiale des surfaces réflectrices tronconiques et périphériques (22, 23).

9. Système d'analyse comportant un système optique (1) selon l'une quelconque des revendications précédentes, un émetteur optique (2) adapté à émettre le faisceau lumineux primaire, et un système de photodétection (3) adapté à détecter le faisceau lumineux secondaire.

10. Système d'analyse selon la revendication 9, dans lequel l'émetteur optique (2) émet un faisceau lumineux primaire collimaté et est incident sur la surface d'entrée (11) suivant l'axe optique principal (Δ).

## Patentansprüche

1. Optisches System (1) zum Lokalisieren und Sammeln, das dazu bestimmt ist, einen von einem optischen Sender (2) ausgesandten primären Lichtstrahl auf eine zu analysierende Probe (4) zu fokussieren und einen sekundären Lichtstrahls, der von der Probe (4) als Reaktion auf den primären Lichtstrahl emittiert wird, zu sammeln und ihn zu einem Fotodetektionssystem (3) zu übertragen, wobei dieses optische System (1) mehrere optische Teile (10, 20, 30) umfasst, die jeweils entlang einer gleichen optischen Hauptachse (Δ) zentriert sind, darunter:
- ein erstes formgebendes optisches Teil (10), das so beschaffen ist, dass es den primären Lichtstrahl auf einer Eingangsfläche (11) empfängt und den um die optische Hauptachse (Δ) ringförmig umlaufenden primären Lichtstrahl durch eine Ausgangsfläche (12) ausgibt;
- ein zweites optisches Teil (20) zum Lokalisieren und Sammeln, das Folgendes umfasst:
-- eine obere zentrale Reflexionsfläche (21), die konisch ist und aus einem zentralen Bereich (21.2) besteht, der von einem peripheren Bereich (21.1) umgeben ist, und die so beschaffen ist, dass sie durch den peripheren Bereich (21.1) den ringförmigen primären Lichtstrahl reflektiert, der von der Ausgangsfläche (12) des ersten optischen Teils (10) kommt, und durch den zentralen Bereich (21.2) den einfallenden sekundären Lichtstrahl reflektiert, der von einer unteren zentralen Reflexionsfläche (24) kommt;
-- die untere zentrale Reflexionsfläche (24), die konisch ist und so beschaffen ist, dass sie den von der oberen zentralen Reflexionsfläche (21) einfallenden primären Lichtstrahl reflektiert und auf die Probe (4) fokussiert; und dass sie den von der Probe (4) emittierten sekundären Lichtstrahl sammelt und reflektiert:
-- mindestens zwei kegelstumpfförmige und periphere Reflexionsflächen (22; 23), die die obere (21) und untere (24) zentrale Reflexionsfläche optisch koppeln;
- ein drittes optisches Umlenkteil (30), das eine Reflexionsfläche (31) umfasst:
-- die zwischen der Ausgangsfläche (12) des ersten optischen Teils (10) und der oberen zentralen Reflexionsfläche (21) des zweiten optischen Teils (20) entlang der optischen Hauptachse (Δ) angeordnet ist und Querabmessungen aufweist, die kleiner sind als die des ringförmigen primären Lichtstrahls, der von der Ausgangsfläche (12) geliefert wird, und
-- dazu geeignet ist, den sekundären Lichtstrahl, der aus dem zentralen Bereich (21.2) der oberen zentralen Reflexionsfläche (21) kommt, in Richtung des Fotodetektionssystems (3) zu reflektieren.

2. Optisches System (1) nach Anspruch 1, wobei das erste, zweite und dritte optische Teil (10, 20, 30) entlang der optischen Hauptachse (Δ) axial übereinander angeordnet sind.

3. Optisches System (1) nach Anspruch 1 oder 2, wobei der erste optische Teil (10) katoptrisch ist, wobei die Eingangs- (11) und Ausgangsflächen (12) reflektierend sind.

4. Optisches System (1) nach einem der Ansprüche 1 bis 3, wobei das zweite optische Teil (20) konisch und katoptrisch ist, wobei die obere (21) und die untere (24) zentrale Reflexionsfläche übereinander liegen und entlang der optischen Hauptachse (Δ) koaxial sind.

5. Optisches System (1) nach einem der Ansprüche 1 bis 4, wobei die mindestens zwei kegelstumpfförmigen und peripheren Reflexionsflächen (22; 23) des zweiten optischen Teils (20) Folgendes umfassen:
- eine obere periphere Reflexionsfläche (22) in Form eines hohlen Kegelstumpfes, die die obere zentrale Reflexionsfläche (21) radial umgibt und die so beschaffen ist, dass sie den primären Lichtstrahl von der oberen zentralen Reflexionsfläche (21) reflektiert und den sekundären Lichtstrahl von einer unteren peripheren Reflexionsfläche (23) reflektiert;
- die untere periphere Reflexionsfläche (23) in Form eines hohlen Kegelstumpfes, der die untere zentrale Reflexionsfläche (24) radial umgibt und dazu geeignet ist, den primären Lichtstrahl von der oberen peripheren Reflexionsfläche (22) zu reflektieren, und den sekundären Lichtstrahl von der unteren zentralen Reflexionsfläche (24) zu reflektieren.

6. Optisches System (1) nach einem der Ansprüche 1 bis 5, bei dem der primäre Lichtstrahl durch die untere zentrale Reflexionsfläche (24) in einem zentralen Neigungswinkel in Bezug auf die optische Hauptachse (Δ) von mindestens 25° fokussiert wird.

7. Optisches System (1) nach einem der Ansprüche 1 bis 6, wobei das zweite optische Teil (20) eine numerische Öffnung von größer oder gleich 0,5 aufweist.

8. Optisches System (1) nach einem der Ansprüche 1 bis 7, wobei das zweite optische Teil (20) einen Arbeitsabstand entlang der optischen Hauptachse (Δ) zwischen der Spitze des von der unteren zentralen Reflexionsfläche (24) gebildeten Kegels und dem Brennpunkt aufweist, der einerseits von einem maximalen Innendurchmesser (D) des optischen Teils (20) und andererseits von einem Profil der kegelstumpfförmigen peripheren und peripheren Reflexionsflächen (22, 23) und der oberen (21) und unteren (24) zentralen Reflexionsflächen abhängt, wobei der maximale Innendurchmesser (D) als ein maximaler Abstand entlang einer Achse bestimmt ist, die orthogonal zur optischen Hauptachse (Δ) verläuft, zwischen zwei gegenüberliegenden Punkten eines radialen Endes der kegelstumpfförmigen und peripheren Reflexionsflächen (22, 23).

9. Analysesystem mit einem optischen System (1) nach einem der vorhergehenden Ansprüche, einem optischen Sender (2), der zum Aussenden des primären Lichtstrahls geeignet ist, und einem Fotodetektionssystem (3), das zum Erfassen des sekundären Lichtstrahls geeignet ist.

10. Analysesystem nach Anspruch 9, bei dem der optische Sender (2) einen kollimierten primären Lichtstrahl aussendet und entlang der optischen Hauptachse (Δ) auf die Eingangsfläche (11) verläuft.

## Claims

1. Optical focusing and collection system (1), intended to focus, on a sample (4) to be analysed, a so-called primary light beam emitted by an optical emitter (2), and to collect a so-called secondary light beam emitted by the sample (4) in response to the primary light beam and to transmit it to a photodetection system (3), this optical system (1) including a plurality of optical parts (10, 20, 30) each centred on one and the same principal optical axis (Δ), including:
∘ a first forming optical part (10), adapted to receive the primary light beam on an entry surface (11), and to supply the primary light beam made annular about the principal optical axis (Δ) by an exit surface (12);
∘ a second focusing and collection optical part (20), including:
• a conical so-called top central reflective surface (21), formed by a central zone (21.2) surrounded by a peripheral zone (21.1) and adapted to reflect, by the peripheral zone (21.1), the annular primary light beam coming from the exit surface (12) of the first optical part (10), and to reflect, by the central zone (21.2), the incident secondary light beam coming from a so-called bottom central reflective surface (24);
• the conical bottom central reflective surface (24), adapted to reflect and focus on the sample (4) the incident primary light beam coming from the top central reflective surface (21); and to collect and reflect the secondary light beam emitted by the sample (4);
• at least two frustoconical peripheral reflective surfaces (22; 23), optically coupling the top (21) and bottom (24) central reflective surfaces;
∘ a third return optical part (30), including a reflective surface (31):
• located between the exit surface (12) of the first optical part (10) and the top central reflective surface (21) of the second optical part (20), on the principal optical axis (Δ) and having transverse dimensions smaller than those of the annular primary light beam supplied by the exit surface (12), and
• adapted to reflect, in the direction of the photodetection system (3), the secondary light beam coming from the central zone (21.2) of the top central reflective surface (21).

2. Optical system (1) according to claim 1, wherein the first, second and third optical parts (10, 20, 30) are superimposed axially on one another on the principal optical axis (Δ).

3. Optical system (1) according to claim 1 or 2, wherein the first optical part (10) is catoptric, the entry (11) and exit (12) surfaces being reflective.

4. Optical system (1) according to any one of claims 1 to 3, wherein the second optical part (20) is conical and catoptric, the top (21) and bottom (24) central reflective surfaces being superimposed on each other and coaxial on the principal optical axis (Δ).

5. Optical system (1) according to any one of claims 1 to 4, wherein said at least two frustoconical peripheral reflective surfaces (22; 23) of the second optical part (20) include:
∘ a top peripheral reflective surface (22), in the form of a hollow truncated cone radially surrounding the top central reflective surface (21), adapted to reflect the primary light beam coming from the top central reflective surface (21) and to reflect the secondary light beam coming from a so-called bottom peripheral reflective surface (23);
∘ the bottom peripheral reflective surface (23), in the form of a hollow truncated cone radially surrounding the bottom central reflective surface (24), adapted to reflect the primary light beam coming from the top peripheral reflective surface (22), and to reflect the secondary light beam coming from the bottom central reflective surface (24).

6. Optical system (1) according to any one of claims 1 to 5, wherein the primary light beam is focused by the bottom central reflective surface (24) at a central angle of inclination with respect to the principal optical axis (Δ) of at least 25°.

7. Optical system (1) according to any one of claims 1 to 6, wherein the second optical part (20) has a numerical aperture greater than or equal to 0.5.

8. Optical system (1) according to any one of claims 1 to 7, wherein the second optical part (20) has a so-called working distance along the principal optical axis (Δ), between the vertex of the cone formed by the bottom central reflective surface (24) and the focal point, dependent firstly on a maximum inside diameter (D) of the optical part (20) and secondly on a profile of the frustoconical peripheral reflective surfaces (22, 23) and top (21) and bottom (24) central reflective surfaces, the maximum inside distance (D) being defined as a maximum distance, along an axis orthogonal to the principal optical axis (Δ), between two opposite points of a radial end of the frustoconical peripheral reflective surfaces (22, 23).

9. Analysis system including an optical system (1) according to any one of the preceding claims, an optical emitter (2) adapted to emit the primary light beam, and a photodetection system (3) adapted to detect the secondary light beam.

10. Analysis system according to claim 9, wherein the optical emitter (2) emits a collimated primary light beam and is incident on the entry surface (11) along the principal optical axis (Δ).
